# EUROPÄISCHE PATENTANMELDUNG

(11) **EP 2 058 636 A2**
(43) Veröffentlichungstag der Anmeldung: **13.05.2009**
(21) Anmeldenummer: 08168290.8
(22) Anmeldetag: 04.11.2008
(51) Int. Cl.: G01J 1/42

(54) **Lichtmessvorrichtung**

(30) Priorität: 05.11.2007 DE 102007052643
(71) Anmelder: Ivoclar Vivadent AG, 9494 Schaan (LI)
(72) Erfinder: Senn, Bruno, 9470 Buchs (CH); Plank, Wolfgang, 6830 Rankweil (AT)
(74) Vertreter: Baronetzky, Klaus

(57) **Zusammenfassung**

Die Erfindung betrifft eine Lichtmessvorrichtung (34), insbesondere für Dental-Lichthärtgeräte, zur Erfassung der Beleuchtungsstärke einer Lichtquelle (19), die insbesondere in dem Lichthärtgerät angeordnet ist, an welche eine Lichtleitvorrichtung, insbesondere mit einer Lichtausstrittsfläche (21) an ihrem Ausgang, angeschlossen ist, wobei die Lichtmessvorrichtung (34) mindestens drei Messfelder (38) aufweist. Die Lichtmessvorrichtung (34) weist mindestens vier in zwei Dimensionen verteilte Messfelder (38) auf.

## Beschreibung

Die Erfindung betrifft eine Lichtmessvorrichtung, insbesondere für Dental-Lichthärtgeräte, gemäß dem Oberbegriff von Anspruch 1.

Eine Lichtmessvorrichtung der vorstehend genannten Art ist beispielsweise aus der DE-A1-39 29 562 bekannt. Bei dieser Lichtmessvorrichtung, die für das Prüfen von Endoskopen eingesetzt wird, wird das von einer Lichtquelle ausgesendete Licht über eine Lichtleitvorrichtung einer Sensoranordnung zugeleitet, wobei durch Vergleich des Ausgangssignals von Sensoren das dortige Endoskop geprüft wird.

Es ist auch bereits einmal vorgeschlagen worden, einen Sensor zu realisieren, der einen kleineren Durchmesser als der Lichtleiter und seine Lichtaustrittsfläche aufweist. Diese Lösung strebt an, unabhängig von dem Durchmesser der Lichtaustrittsfläche eine Messung der abgegebenen Beleuchtungsstärke zu ermöglichen. Bei dieser Lösung besteht jedoch der gravierende Nachteil, dass im Grunde lediglich die Leuchtdichte im gemessenen Bereich der Lichtaustrittsfläche erfasst wird. Dies bedeutet, dass bei einer vergleichweise großen Lichtaustrittsfläche nur ein prozentual geringerer Anteil der abgegebenen Lichtleistung erfasst wird, so dass insofern bei unterschiedlichen Größen der Lichtaustrittsflächen Fehlmessungen entstehen.

Insbesondere ist auch bei dieser Lösung eine Abstandsmessung nicht möglich, bei der also das Lichthärtgerät lediglich über das Sensorfeld gehalten wird, um festzustellen, ob die abgegebene Beleuchtungsstärke noch ausreichend ist, denn durch die Strahlaufweitung entstehen dann bei dieser Lösung stets Fehlmessungen.

Gemäß der nicht vorveröffentlichten deutschen Patentanmeldung 10 2006 035 657 ist es vorgeschlagen worden, eine eindimensionale Anordnung von Lichtsensoren zu verwenden und deren Ausgangssignal für die Bestimmung der Lichtleistung einer Lichtquelle zu verwenden. Diese Lösung ist im Grund einfach und stellt eine Verbesserung gegenüber den zuvor bekannten Lösungen dar. Andererseits vermag diese Konstruktion kein exaktes Messergebniss zu vermitteln, wenn die Lichtaustrittsfläche eine von der kreisrunden Form abweichende Form aufweist.

Demgegenüber liegt der Erfindung die Aufgabe zugrunde, eine Lichtmessvorrichtung gemäß dem Oberbegriff von Anspruch 1 zu schaffen, die unabhängig von der Form einer Lichtaustrittsfläche eine zuverlässige und einfache Bestimmung der Beleuchtungsstärke ermöglicht.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass die für die Lichtmessvorrichtung vorgesehenen Messfelder in mindestens zwei Dimensionen verteilt sind. In einem kartesischen Koordinatensystem können die Messfelder beispielsweise in X- sowie in Y-Richtung verteilt sein, wobei es aber auch möglich ist, die dritte Dimension auszunutzen, indem Messfelder in Z-Richtung, also untereinander angeordnet sind, oder ein anderes als das kartesische Koordinatensystem zu verwenden.

Überraschend lässt sich mit dieser erfindungsgemäßen Maßnahme, bevorzugt in Kombination mit der Maßnahme, die von den Messfeldern aufgespannte Matrix größer als die Lichtaustrittsfläche auszugestalten, in überraschend einfacher Weise die Beleuchtungsstärke der Lichtquelle erfassen, indem die Ausgangssignale der Messfelder aufintegriert werden. Hierzu ist die Umgebung der Messfelder - abgesehen von der Lichtquelle - bevorzugt abgedunkelt, so dass nicht von der Lichtquelle beaufschlagte Messfelder ein Ausgangssignal in der Größe Null abgeben. Streulicht hingegen, das außerhalb des Fokussierbereichs, des "Leuchtflecks" der Lichtquelle abgegeben wird, wird von den umgebenden Messfeldern erfasst und insofern in die Beurteilung der aufintegrierten Beleuchtungsstärke einbezogen.

Bevorzugt weist die Lichtmessvorrichtung aber einen Anschlag auf, der auch durch eine entsprechende Markierung ersetzt werden kann und dafür bestimmt ist, als Bezugsmarke für die Lichtmessung zu dienen, indem nämlich dort die Lichtaustrittsfläche auf die Messfeldanordnung aufgesetzt wird. Der Vorteil dieser Lösung ist die deutliche Reduktion von Streulicht, so dass die aufintegrierte gemessene Beleuchtungsstärke der Messfelder der tatsächlichen Lichtabgabe beispielsweise des dentalen Lichthärtgeräts entspricht. Durch die zweidimensionale oder mindestens zweidimensionale Erfassung der Beleuchtungsstärke ist die Erfassung prinzipiell unabhängig von der Form der Lichtquelle. Während Lichtfaserstäbe typischerweise einen kreisrunden Lichtfleck abgeben, werden vermehrt Dental-Lichthärtgeräte angeboten, bei denen eine Chipanordnung an der Spitze eines Führungsstabs die Lichtabgabe bewirkt, wobei auch bei einer aufgesetzten Sammellinse typischerweise die Lichtabgabe dann nicht kreisrund, sondern rechteckig mit abgerundeten Ecken erfolgt. Durch die erfindungsgemäße Anordnung von Messfeldern lassen sich Messfehler dennoch vermeiden, und zwar auch dann, wenn das Lichthärtgerät schräg oder verdreht auf die Messfeldanordnung aufgesetzt wird.

Überraschend ist es auch möglich, Schrägstellungs-Fehler zu kompensieren: Durch die Schrägstellung werden die im spitzen Winkel beaufschlagten Messfelder typischerweise stärker und die im stumpfen Winkel beaufschlagten Messfelder typischerweise weniger stark beleuchtet. Die aufsummierte Messung der beaufschlagten Messfelder ermittelt hingegen wiederum im Wesentlichen das gleiche Messergebnis.

In vorteilhafter Ausgestaltung der Erfindung ist es möglich, die so erfassten Schrägstellungsfehler zusätzlich durch eine Steuervorrichtung zu kompensieren, die nach der Art einer Korrekturtabelle bei unterschiedlichen Beleuchtungsstärken der Messfelder, die einem Gradienten entsprechen und insofern auf die Schrägstellung des Lichthärtgeräts hindeuten, eine exakte Korrektur vornimmt.

Erfindungsgemäß besonders günstig ist es auch, dass nach der Art einer Matrix angeordnete Messfelder preisgünstig zur Verfügung stehen. Beispielsweise können CCD-Sensoren eingesetzt werden, die eine Vielzahl von Messfeldern, wie beispielsweise 512x512 Messfelder oder gar 1024x1024 Messfelder bieten und damit eine feinfühlige und exakte Auswertung auch der Lichtfleckgrenzen ermöglichen.

Derartige Sensoren lassen sich auch als Auswerteeinheit einsetzen, wobei die erfassten Messsignale beispielsweise in Schieberegistern zwischengespeichert sind und von einer Auswertevorrichtung zyklisch abgerufen werden. Ein derartiger Sensor weist eine Messfeldfläche von beispielsweise 25x25mm auf, die dementsprechend deutlich größer als der Durchmesser oder die Seitenlänge der Lichtaustrittsfläche des Lichthärtgeräts ist, die beispielsweise 3mm oder 5mm betragen kann.

Dementsprechend ist es erfindungsgemäß besonders günstig, dass die Erfassung und Kalibrierung des Lichthärtgeräts auch ohne genaue Ausrichtung auf der Messfläche möglich ist.

In einer weiteren vorteilhaften Ausgestaltung ist es vorgesehen, dass sich die Messfelder in zwei zueinander rechtwinkligen Dimensionen in einem vorgegebenen Rastermass erstrecken und eine spektrale Empfindlichkeit aufweisen, die dem Emissionsspektrum der Lichtquelle angepasst ist.

In einer weiteren vorteilhaften Ausgestaltung ist es vorgesehen, dass die Lichtquelle Licht im Spektralbereich zwischen 380 nm und 515 nm emittiert und dass die Messfelder insbesondere eine spektrale Empfindlichkeit aufweisen, deren Empfindlichkeitsmaximum innerhalb des Wellenlängenbereichs 380 nm bis 515 nm liegt.

In einer weiteren vorteilhaften Ausgestaltung ist es vorgesehen, dass die Messfelder eine Matrix, insbesondere eine zweidimensionale Matrix, bilden, deren Erstreckung in jeder Richtung größer als die Lichtaustrittsfläche ist, insbesondere in jede Richtung mindestens doppelt so groß wie der Durchmesser oder die betreffende Länge der Lichtaustrittsfläche.

In einer weiteren vorteilhaften Ausgestaltung ist es vorgesehen, dass die Lichtmessvorrichtung angrenzend an die von den Messfeldern aufgespannte Fläche oder Matrix einen Anschlag aufweist, der die Bewegung der Lichtleitvorrichtung an ihrem Lichtausgang in Richtung auf den Anschlag zu begrenzt.

In einer weiteren vorteilhaften Ausgestaltung ist es vorgesehen, dass der Anschlag die die Messfeldanordnung bildenden Messfelder wenigstens teilweise umgibt und ihre Oberfläche überragt.

In einer weiteren vorteilhaften Ausgestaltung ist es vorgesehen, dass die Seitenlängen der Messfeldanordnung größer als der Durchmesser der Lichtaustrittsfläche sind und insbesondere etwa 25 mm oder weniger betragen.

In einer weiteren vorteilhaften Ausgestaltung ist es vorgesehen, dass die Messfelder Sensoren der Lichtmessvorrichtung in Form zueinander gleicher Fotosensoren ausgebildet sind, die nach dem Prinzip gekoppelter Ladungsträger (CCD) arbeiten und sich nach der Art einer Matrix zweidimensional erstrecken.

In einer weiteren vorteilhaften Ausgestaltung ist es vorgesehen, dass die Lichtmessvorrichtung eine Anzeigevorrichtung aufweist oder an eine Anzeigevorrichtung angeschlossen ist, über welche die von der Lichtmessvorrichtung gemessene Beleuchtungsstärke in mW/cm² und/oder der Durchmesser der Lichtaustrittsfläche des Lichtleiters anzeigbar ist.

In einer weiteren vorteilhaften Ausgestaltung ist es vorgesehen, dass auf der Anzeigevorrichtung die Lichtaustrittsfläche symbolisiert dargestellt ist und insbesondere einen Teil der Anzeigefläche der Anzeigevorrichtung einnimmt.

In einer weiteren vorteilhaften Ausgestaltung ist es vorgesehen, dass die Intensität der Bestrahlung der Messfelder durch die Lichtquelle durch Helligkeitsunterschiede und/oder unterschiedliche Farben auf der Anzeigevorrichtung dargestellt ist.

In einer weiteren vorteilhaften Ausgestaltung ist es vorgesehen, dass die auf der Anzeigevorrichtung dargestellte Lichtquelle in ihrer Form der Lichtaustrittsfläche entspricht und insbesondere rund, oval, eckig ist oder eine von der kreisrunden Form abweichende Form aufweist.

In einer weiteren vorteilhaften Ausgestaltung ist es vorgesehen, dass die Lichtmessvorrichtung eine Speichervorrichtung aufweist, mit welcher das Ergebnis mindestens eines Messvorgangs speicherbar ist und/oder über welche auch die Änderung der Lichtabgabe der Lichtquelle feststellbar ist.

In einer weiteren vorteilhaften Ausgestaltung ist es vorgesehen, dass die Lichtmessvorrichtung wenigstens eine Schnittstelle aufweist, über welche Daten mit einem externen Gerät austauschbar sind, insbesondere über eine drahtgebundene oder eine drahtlose Verbindung.

In einer weiteren vorteilhaften Ausgestaltung ist es vorgesehen, dass die Lichtmessvorrichtung eine interne Stromquelle und/oder eine externe Stromquelle aufweist und dass insbesondere ein Akku, der in der Lichtmessvorrichtung eingesetzt ist, mit dem in dem Lichthärtgerät eingesetzten Akku kompatibel ist.

In einer weiteren vorteilhaften Ausgestaltung ist es vorgesehen, dass die Lichtmessvorrichtung mit einer Dockingstation verbindbar ist, insbesondere mit der Dockingstation eines Lichthärtgeräts.

In einer weiteren vorteilhaften Ausgestaltung ist es vorgesehen, dass jedes Messfeld ein Ausgangssignal abgibt, dessen Größe der durch die Lichtquelle ausgelösten Beleuchtungsstärke des Messfelds entspricht.

In einer weiteren vorteilhaften Ausgestaltung ist es vorgesehen, dass jedes Messfeld ein Ausgangssignal abgibt, das entweder dem Belichtungszustands "beleuchtet" oder dem Beleuchtungszustand "nicht beleuchtet" entspricht.

Erfindungsgemäß besonders günstig ist es, mit der zuvor beschriebenen Lichtmessvorrichtung zwei verschiedene Messungen in zwei verschiedenen Ebenen durchzuführen. Auf diese Weise läßt sich beispielsweise der Zuwachs an beleuchteten Messfeldern in der Lichtmessvorrichtung zwischen beiden Ebenen ermitteln, Dieser Zuwachs liefert überraschender Weise mehr Informationen über die Form und das Abstrahlverhalten der Lichtleitvorrichtung.

Erfindungsgemäß kann dabei eine einzelne Lichtmessvorrichtung von einer in die andere Ebene bewegt werden, um dort jeweils eine Messung durchzuführen. Vorzugsweise sind jedoch zwei verschiedene Lichtmessvorrichtungen in den beiden Ebenen vorhanden, so dass die beiden Messungen parallel durchgeführt werden können.

Mit der in Form des Zuwachses zusätzlich vorhandenen Information kann die Form oder Größe der Lichtaustrittsfläche der Lichtleitvorrichtung bestimmt werden. Alternativ oder zusätzlich kann aber auch das Abstrahlverhalten selbst näher bestimmt werden. Dazu kann basierend auf dem Zuwachs der Öffnungswinkel des Lichtkegels oder die Lichtverteilung des emittierten Lichts berechnet werden.

In einer weiteren Ausführung der Erfindung enthält eine Lichtmessvorrichtung, insbesondere für Dental-Lichthärtgeräte, mit welcher mindestens eine physikalischen Größe des aus einer Lichtleitvorrichtung eines Lichthärtgerätes emittierten Lichts erfassbar ist eine erste Sensorvorrichtung zum Erfassen des emittierten Lichts in einer ersten Ebene, eine zweite Sensorvorrichtung zum Erfassen des emittierten Lichts in einer zweiten, von der ersten Ebene beabstandeten, Ebene und eine Auswerteschaltung zum Bestimmen einer Differenz zwischen der Erfassung in der ersten und zweiten Sensorvorrichtung.

Die Auswerteschaltung kann eine Form und/oder eine Größe einer Lichtaustrittsfläche der Lichtleitvorrichtung ermitteln und insbesondere die gesamte beleuchtete Fläche der Ebenen erfassen.

Die Auswerteschaltung kann das Abstrahlverhalten der Lichtleitvorrichtung auswerten, wobei das Abstrahlverhalten insbesondere die an den Ebenen erfasste Bestrahlungstärke, den Öffnungswinkel eines Lichtkegels und/oder eine Lichtverteilung des emittierten Lichts umfasst.

Die Sensorvorrichtungen, können je eine beleuchtete Fläche aufweisen, wobei die Flächen in der jeweiligen Ebene angeordnet sind, wobei die Ebenen sich vorzugsweise parallel zueinander erstrecken.

In einer weiteren Ausführung der Erfindung umfasst ein Verfahren zum Erfassen mindestens einer physikalischen Größe des emittierten Lichts einer Lichtleitvorrichtung, insbesondere für Dental-Lichthärtgeräte, die Schritte Erfassen des emittierten Lichts in einer ersten Ebene, Erfassen des emittierten Lichts in einer zweiten, von der ersten Ebene beabstandeten, Ebene und Bestimmen einer Differenz zwischen der ersten und zweiten Erfassung.

Weitere Vorteile, Einzelheiten und Merkmale ergeben sich aus der nachfolgenden Beschreibung eines Ausführungsbeispiels der Erfindung anhand der Zeichnungen.

### Es zeigen:

- Fig. 1: eine schematische Anordnung einer erfindungsgemäßen Lichtmessvorrichtung, in Kombination mit einem Lichthärtgerät;
- Fig. 2: eine schematische Ansicht einer erfindungsgemäßen Lichtmessvorrichtung in der Draufsicht; und
- Fig. 3: eine schematische Anordnung einer erfindungsgemäßen Lichtmessvorrichtung gemäß einer weiteren Ausführung.

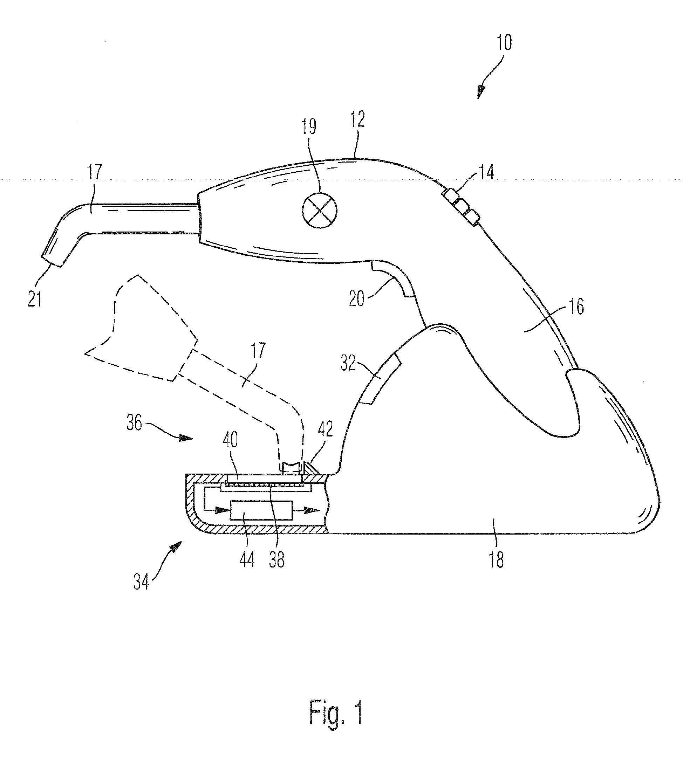

Das in Fig. 1 dargestellte Lichthärtgerät 10 weist ein Gehäuse 12 und eine Anzeigevorrichtung 14 auf, die sich an der Rückseite oben an einem Pistolengriff 16 des Lichthärtgeräts 10 befindet. Das Lichthärtgerät weist an dem vorderen Ende des Gehäuses 12 eine Lichtleitvorrichtung 17 auf, die Licht von einer schematisch dargestellten Lichtquelle 19 einer Lichtaustrittsfläche 21 an dem vorderen Ende der Lichtleitvorrichtung zuleitet.

Das Lichthärtgerät 10 als eine beispielhafte Vorrichtung, die eine Lichtquelle 19 aufnimmt, ist in einer Basisstation 18 absetzbar. In dem Pistolengriff weist es in an sich bekannter Weise Akkumulatoren auf, die beim Absetzen in der Basisstation 18 automatisch dann geladen werden, wenn der Ladezustand der Akkumulatoren dies erfordert. Über einen Tastschalter 20, der an der inneren Oberseite des Pistolengriffs 16 in an sich bekannter Weise angeordnet ist, lässt sich das Lichthärtgerät einschalten. Im eingeschalteten Zustand wird Licht von der schematisch angedeuteten Lichtquelle 19 abgegeben und über die Lichtleichtvorrichtung 17 emittiert.

Das vordere Ende der Lichtleitvorrichtung ist abgekröpft, um einen vereinfachten Zugang zu schlecht erreichbaren Stellen zu erzielen, an denen eine Lichthärtung von zu polymerisierendem Material vorgenommen werden muss. Die Abkröpfung bedingt eine Schrägstellung der Lichtaustrittsfläche 21 sowohl zur Hand des Benutzers, die den Pistolengriff 16 umgreift, als auch zur Hauptachse des Lichthärtgeräts 10, die durch die Lichtquelle 19 und die Lichtleitvorrichtung 17 verläuft.

Die Lichtaustrittsfläche 21 kann beispielsweise eine lichtdurchlässige Abdeckung oder auch eine Sammellinse aufweisen.

Die Basisstation 18 ist in dem dargestellten Ausführungsbeispiel in besonderer Weise ausgestaltet. Sie umfasst eine Lichtmessvorrichtung 34, die an dem vorderen Ende der Basisstation 18 ausgebildet ist, sowie eine Anzeigevorrichtung 32, die - gegebenenfalls zusammen mit der Anzeigevorrichtung 14 - an dem Lichthärtgerät 10 den Ladezustand der Akkumulatoren und/oder weitere Parameter des Lichthärtgeräts anzeigt.

Die Lichtmessvorrichtung 34, die auch räumlich getrennt von der Basisstation 18 ausgestaltet sein kann, dient dazu, zu überprüfen, ob die optischen Eigenschaften des Lichthärtgeräts 10 - also unabhängig vom Ladezustand der Akkumulatoren - ausreichend sind, um eine erfolgreiche Durchhärtung der zu polymerisierenden Dentalrestaurationsmaterialien zu gewährleisten.

Eine ausreichende Lichtabgabe is ausgesprochen wichtig, denn bei nicht-ausreichender Lichtabgabe erfolgt keine vollständige Durchpolymerisation der Dentalrestaurationsteile, was aus verschiedenen Gründen besonders kritisch ist.

Die Lichtabgabe kann beispielsweise durch eine Verschlechterung der Lichtquelle, eine Verschmutzung der dort angebrachten Reflektoren, ein Verkratzen oder Eintrüben von Sammellinsen an der Lichtleitvorrichtung 17, mechanische Störungen wie Gehäuserisse oder dergleichen, oder eine Fehlsteuerung der Steuervorrichtung für die Lichtabgabe im Lichthärtgerät erfolgen, wobei sich aus den Daten der Anzeigevorrichtungen 14 und 32 unmittelbar keine Fehlfunktion ableiten lässt.

Erfindungsgemäß lässt sich die Lichtabgabe jedoch mit der Lichtmessvorrichtung 34 überprüfen. Hierzu weist die Lichtmessvorrichtung eine Messfeldanordnung 36 auf, die aus einer Vielzahl von in zwei Dimensionen nebeneinander angeordneten Messfeldern 38 besteht, die das dort auftretende Licht messen und in elektrische Signale umleiten.

Die Messfeldanordnung 36 ist durch ein ebenfalls zweidimensionales Fenster 40 geschützt, das beispielsweise eine transparente Abdeckung aufweist, so dass die Messfelder 38 gegen Verschmutzung geschützt sind.

Ferner weist die Lichtmessvorrichtung 34 einen Anschlag 42 auf, der sich unmittelbar angrenzend an das hintere Ende der Messfeldanordnung 36 als Anschlag für die Lichtleitvorrichtung 17 erstreckt. Die Lichtleitvorrichtung 17 ist in gestrichelter Form zusätzlich dargestellt, um die Lage des Lichthärtgeräts bei der Kalibrierung bzw. beim Erfassen der abgegebenen Lichtleistung deutlich zu machen. Es ist ersichtlich, dass die bevorzugte Ausrichtung so vorgesehen ist, dass die Lichtaustrittsfläche 21 sich parallel zum Fenster 40 erstreckt.

Es ist ersichtlich, dass die Lichtaustrittsfläche 21 wesentlich kleiner als die Messfeldanordnung 36 und das Fenster 40 ist. Das Flächenverhältnis beträgt im Fall des dargestellten Ausführungsbeispiels beispielsweise 1 zu 10. Damit verbleibt eine Vielzahl von Messfeldern 38 unabgedeckt durch die Lichtaustrittsfläche 21 und ist dem Einfall von Tageslicht oder Kunstlicht aus der Umgebung der Basisstation 18 ausgesetzt.

Um Verfälschungen des Messergebnisses zu verhindern, ist daher in einer Ausführungsform eine Filtervorrichtung vorgesehen, die auf die abgegebene Wellenlänge des Lichthärtgeräts 10 abgestimmt ist, die beispielsweise in den UV-Bereich hineinreicht und es damit ermöglicht, eine Unterscheidung gegenüber Umgebungslicht vorzunehmen. Alternativ kann auch die Erfassung von Umgebungslicht als "unbeleuchtet" definiert werden, so dass lediglich bei Lichtempfang der Messfelder oberhalb einer vorgegebenen Schwelle eine Beleuchtung durch die Lichtaustrittsfläche 21 angenommen wird.

Um das Auftreffen von Fehllicht aus der Umgebung auf die freien Bereiche 46 der Messfeldanordnung 36 zu vermeiden, ist es auch möglich, eine ringförmige Dichtlippe beispielsweise aus Gummi oberhalb des Fensters 40 vorzusehen, die dann von der Lichtleitvorrichtung oder dem Schaft des Lichthärtgeräts 12 durchtreten wird, wobei die Dichtlippe gegen das Lichthärtgerät 12 abdichtet.

Das Ausgangssignal sämtlicher Messfelder 38 wird erfasst und einer Auswerteschaltung 44 zugeleitet. Die Auswerteschaltung 44 erfasst sowohl die Intensität der abgegebenen Strahlung der einzelnen Messfelder als auch, bei welchem Messfeld 38 keine Beleuchtung oder eine Beleuchtung mit Umgebungslicht stattfindet. Aus den hier erfassten Messwerten wird die gesamte Beleuchtungsstärke aufintegriert, wobei als "unbeleuchtet" gegebenenfalls die Beleuchtung mit Umgebungslicht definiert wird.

Basierend auf den so erfassten Messergebniss lässt sich - nachdem die Matrix oder Anordnung der Messfelder 38 zweidimensional vorgesehen ist - sowohl der Durchmesser der Lichtaustrittsfläche 21 als auch dessen Form und auch die von der Lichtquelle abgegebene Beleuchtungsstärke ermitteln, wobei diese dann auch an der Anzeigevorrichtung 32 angezeigt werden kann.

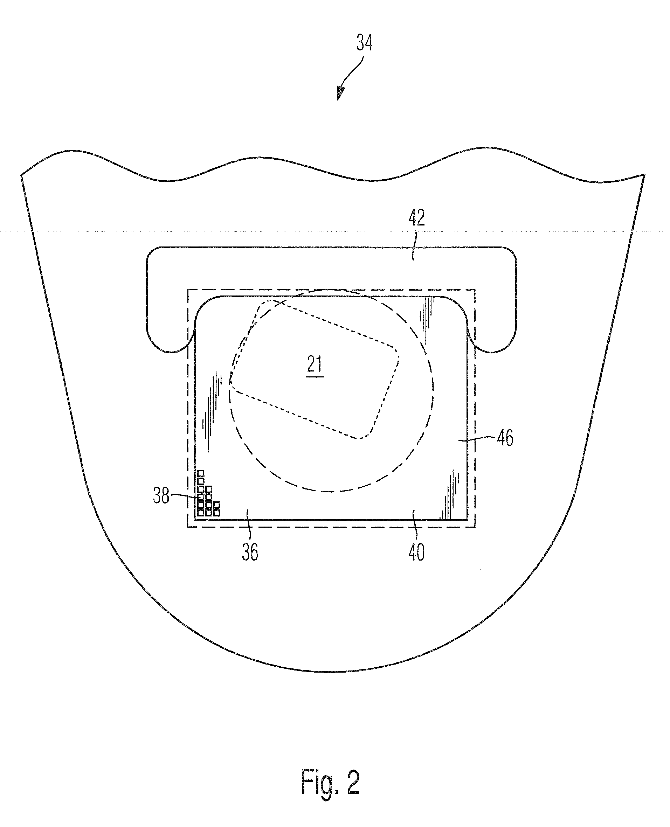

Aus Fig. 2 ist eine Lichtmessvorrichtung 34 in vergrößerter Darstellung ersichtlich. Der Anschlag 42 ist im Wesentlichen U-förmig geformt und begrenzt seitlich das Fenster 40, das die Messfeldanordnung 36 abdeckt.

Einzelne Messfelder 38 sind hier schematisch dargestellt, wobei es sich versteht, dass entsprechende Messfelder 38 über die gesamte Messfeldanordnung 36 gleichmäßig verteilt sind.

Durch die Realisierung des Anschlags 42 lässt sich die Lichtaustrittsfläche 21 des Lichthärtgeräts 10 sicher im Erfassungsbereich der Messfeldanordnung 36 plazieren. Die genaue Anordnung ist hierbei nicht entscheidend, wie es durch die gestrichelt und punktiert dargestellten verschiedenen Lichtaustrittsflächen 21 in Fig. 2 angedeutet ist.

In einer modifizierten Anordnung umgibt der Anschlag 42 das Fenster 40, so dass die Lichtaustrittsfläche 21 stets oberhalb des Fensters 40 verbleibt.

Wie aus Fig. 2 ersichtlich ist, wird auch eine schrägstehende und eine Lichtaustrittsfläche ohne Weiteres erfasst, deren Form von der kreisrunden Form abweicht.

Erfindungsgemäß ist es dementsprechend ausgesprochen genau möglich, die Größe der Lichtaustrittsfläche und auch die Beleuchtungsstärke exakt zu erfassen.

Es versteht sich, dass die Lichtmessvorrichtung 34 auch unabhängig von der Basisstation 18 angebracht sein kann, und es ist auch möglich, eine zentrale Lichtmessvorrichtung für eine Vielzahl von Lichthärtgeräten 10 zu realisieren. In diesem Fall ist auch eine Codierung des betreffenden Lichthärtgeräts bzw. dessen Handstück sinnvoll, so dass die Lichtmessvorrichtung 34 erfasst, welches Handstück gerade gemessen werden kann. Bei dieser Ausgestaltung werden bevorzugt die gemessenen Werte erfasst und abgespeichert, und aus einer Verschlechterung der optischen Eigenschaften wird festgestellt, wann damit zu rechnen ist, dass das Lichthärtgerät einer Generalüberholung bedarf.

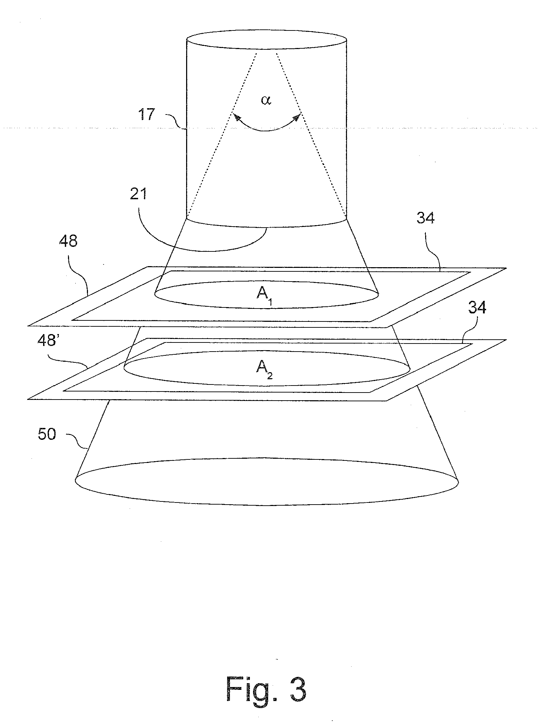

In Fig. 3 ist eine weitere Ausführungsform der erfindungsgemäßen Lichtmessvorrichtung dargestellt.

Bei dieser Ausführungsform sind zwei verschiedene erfindungsgemäße Lichtmessvorrichtungen 34 in zwei verschiedenen Ebenen 48, 48' unterhalb der Lichtaustrittsfläche 21 der Lichtleitvorrichtung 17 angeordnet. Der Lichtkegel 50 des emittierten Lichts aus der Lichtleitvorrichtung 17 beleuchtet damit in beiden Ebenen 48, 48' je eine bestimmte Fläche A₁, A₂, wobei die beleuchtete Fläche A₁ in der ersten Ebene 48 kleiner ist, als die beleuchtete Fläche A₂ in der zweiten Ebene 48'.

Der Flächenunterschied zwischen den beleuchteten Flächen der ersten und zweiten Ebene 48, 48' kann durch die Auswerteschaltung 44 erfasst und verarbeitet werden. Durch diese einfache Maßnahme ist die Bestrahlungsstärke nunmehr nicht nur in einer einzigen Ebene, sondern unabhängig vom Abstand zur Lichtaustrittsfläche 21 bestimmbar.

Über einfache trigonometrische Berechnungen oder über numerische Extrapolationen kann die Auswerteschaltung 44 den Öffnungswinkel a des Lichtkegels bestimmen.

Ferner können die Messungen in den beiden Lichtmessvorrichtungen 34 auch zur Bestimmung des Abstrahlverhaltens der Lichtaustrittsfläche 21 herangezogen werden. Das so bestimmte Abstrahlverhalten kann mit einer Referenz verglichen werden. Verunreinigungen auf der Lichtaustrittsfläche 21 und Alterserscheinungen der Lichtquelle 18 vermindern die Bestrahlungsstärke und gefährden ein korrektes Aushärten einer Dentalrestauration. Zusätzlich kann das Abstrahlverhalten durch eine geeignete Nachregelung beispielsweise der Eingangsenergie der Lichtquelle 18 an den gewünschten Sollwert angepasst werden, und das Lichthärtgerät auf diese Weise geeicht und kalibriert werden.

Die Messungen lassen sich auch zum Bestimmen der Lichtverteilung des emittierten Lichts für jede beliebige, von der Lichtaustrittsfläche 21 entfernte Ebene heranziehen. Dadurch kann beispielsweise bestimmt werden, welche Lichtmenge auf ein Dentalrestaurationsteil auftrifft, um so die notwendige Zeit zum Aushärten zu berechnen.

Weiter ist beispielsweise auch bestimmbar, welcher Flächenanteil einer vorgegebenen Gesamtfläche beleuchtet wird.

## Patentansprüche

1. Lichtmessvorrichtung, insbesondere für Dental-Lichthärtgeräte, zur Erfassung der Beleuchtungsstärke eines Lichts, das aus der Lichtaustrittsfläche einer Lichtleitvorrichtung des Lichthärtgerätes austritt, **dadurch gekennzeichnet, dass** die Lichtmessvorrichtung mindestens vier sich in zwei Dimensionen erstreckende Messfelder aufweist.

2. Lichtmessvorrichtung nach Anspruch 1, **dadurch gekennzeichnet, dass** sich die Messfelder (38) in zwei zueinander rechtwinkligen Dimensionen in einem vorgegebenen Rastermass erstrecken und eine spektrale Empfindlichkeit aufweisen, die dem Emissionsspektrum der Lichtquelle (19) angepasst ist.

3. Lichtmessvorrichtung nach einem der vorhergehenden Ansprüche, **dadurch gekennzeichnet, dass** die Lichtquelle (19) Licht im Spektralbereich zwischen 380 nm und 515 nm emittiert und dass die Messfelder (38) insbesondere eine spektrale Empfindlichkeit aufweisen, deren Empfindlichkeitsmaximum innerhalb des Wellenlängenbereichs 380 nm bis 515 nm liegt.

4. Lichtmessvorrichtung nach einem der vorhergehenden Ansprüche, **dadurch gekennzeichnet, dass** die Messfelder (38) eine Matrix, insbesondere eine zweidimensionale Matrix, bilden, deren Erstreckung in jeder Richtung größer als die Lichtaustrittsfläche (21) ist, insbesondere in jede Richtung mindestens doppelt so groß wie der Durchmesser oder die betreffende Länge der Licht austrittsfläche (21).

5. Lichtmessvorrichtung nach einem der vorhergehenden Ansprüche, **dadurch gekennzeichnet, dass** die Lichtmessvorrichtung (34) angrenzend an die von den Messfeldern (38) aufgespannte Fläche oder Matrix einen Anschlag (42) aufweist, der die Bewegung der Lichtleitvorrichtung (17) an ihrem Lichtausgang in Richtung auf den Anschlag (42) zu begrenzt.

6. Lichtmessvorrichtung nach einem der vorhergehenden Ansprüche, **dadurch gekennzeichnet, dass** die Seitenlängen der Messfeldanordnung (36) größer als der Durchmesser der Lichtaustrittsfläche (21) sind und insbesondere etwa 25 mm oder weniger betragen.

7. Lichtmessvorrichtung nach einem der vorhergehenden Ansprüche, **dadurch gekennzeichnet, dass** die Messfelder Sensoren der Lichtmessvorrichtung (34) in Form zueinander gleicher Fotosensoren ausgebildet sind, die nach dem Prinzip gekoppelter Ladungsträger (CCD) arbeiten und sich nach der Art einer Matrix zweidimensional erstrecken.

8. Lichtmessvorrichtung nach einem der vorhergehenden Ansprüche, **dadurch gekennzeichnet, dass** die Lichtmessvorrichtung (34) eine Anzeigevorrichtung (14) aufweist oder an eine Anzeigevorrichtung (14) angeschlossen ist, über welche die von der Lichtmessvorrichtung (34) gemessene Beleuchtungsstärke in mW/cm² und/oder der Durchmesser der Lichtaustrittsfläche des Lichtleiters anzeigbar ist.

9. Lichtmessvorrichtung nach Anspruch 13, **dadurch gekennzeichnet, dass** auf der Anzeigevorrichtung (14) die Lichtaustrittsfläche (21) symbolisiert dargestellt ist und insbesondere einen Teil der Anzeigefläche der Anzeigevorrichtung (14) einnimmt.

10. Lichtmessvorrichtung nach Anspruch 13 oder 14, **dadurch gekennzeichnet, dass** die Intensität der Bestrahlung der Messfelder (38) durch die Lichtquelle (19) durch Helligkeitsunterschiede und/oder unterschiedliche Farben auf der Anzeigevorrichtung (14) dargestellt ist.

11. Lichtmessvorrichtung nach einem der vorhergehenden Ansprüche, **dadurch gekennzeichnet, dass** die auf der Anzeigevorrichtung (14) dargestellte Lichtquelle (19) in ihrer Form der Lichtaustrittsfläche (21) entspricht und insbesondere rund, oval, eckig ist oder eine von der kreisrunden Form abweichende Form aufweist.

12. Lichtmessvorrichtung nach einem der vorhergehenden Ansprüche, **dadurch gekennzeichnet, dass** jedes Messfeld (38) ein Ausgangssignal abgibt, dessen Größe der durch die Lichtquelle (19) ausgelösten Beleuchtungsstärke des Messfelds (38) entspricht.

13. Lichtmessvorrichtung nach einem der vorhergehenden Ansprüche, **dadurch gekennzeichnet, dass** jedes Messfeld (38) ein Ausgangssignal abgibt, das entweder dem Belichtungszustands "beleuchtet" oder dem Beleuchtungszustand "nicht beleuchtet" entspricht.

14. Lichtmessvorrichtung, insbesondere für Dental-Lichthärtgeräte, mit welcher mindestens eine physikalischen Größe des aus einer Lichtleitvorrichtung eines Lichthärtgerätes emittierten Lichts erfassbar ist **gekennzeichnet durch** eine erste Sensorvorrichtung zum Erfassen des emittierten Lichts in einer ersten Ebene, **durch** eine zweite Sensorvorrichtung zum Erfassen des emittierten Lichts in einer zweiten, von der ersten Ebene beabstandeten, Ebene und **durch** eine Auswerteschaltung zum Bestimmen einer Differenz zwischen der Erfassung in der ersten und zweiten Sensorvorrichtung.

15. Lichtmessvorrichtung nach Anspruch 14, **dadurch gekennzeichnet, dass** die Auswerteschaltung das Verhältnis der beleuchteten Flächen in den beiden Ebenen und insbesondere auch das Verhältnis der beleuchteten Fläche zur Gesamtfläche der Ebene erfasst und hieraus optische Eigenschaften, insbesondere die Strahlaufweitung, des von dem Lichthärtgerät abgegebenen Lichts ermittelt.
